Europäisches Patentamt

**European Patent Office** (11) Publication number: **0 081 339**

Office européen des brevets **A2**

(12) **EUROPEAN PATENT APPLICATION**

(21) Application number: **82306394.6** (51) Int. Cl.³: **H 01 M 2/02**
**H 01 M 2/08**

(22) Date of filing: **01.12.82**

(30) Priority: **04.12.81 GB 8136650**

(43) Date of publication of application:
**15.06.83 Bulletin 83/24**

(84) Designated Contracting States:
**BE CH DE FR GB IT LI NL**

(71) Applicant: **VENTURE TECHNOLOGY LIMITED**
**18 Nuffield Way**
**Abingdon Oxfordshire(GB)**

(72) Inventor: **Gilmour, Alexander**
**35 Manor Road**
**Henley Oxfordshire(GB)**

(74) Representative: **Pendlebury, Anthony et al,**
**Page, White & Farrer 5 Plough Place New Fetter Lane**
**London EC4A 1HY(GB)**

(54) Sealing of electrochemical cells.

(57) A method of sealing together conductive parts (4, 6) of an electrochemical cell while retaining the said parts (4, 6) electrically insulated from each other, which method comprises interposing between the parts to be sealed a sealing material (16) characterised in that the sealing material comprises a thermoplastic bonding material which will flow at the temperature which is to be used for heat-sealing the said parts together and an interlayer of an insulating material having a melting point higher than the said temperature, and in that the parts to be sealed together are heat-sealed by applying heat and pressure to the parts to be sealed thereby to soften the bonding material so that it adheres to the said parts to form the required seal without affecting the insulating material.

FIG.1.

-1-

SEALING OF ELECTROCHEMICAL CELLS

The present invention relates to a method of sealing electrochemical cells and to electrochemical cells sealed by such a method.

The sealing of cells has long been considered a problem of major significance in that leakage of cell constituents may lead to premature failure of the cell or to damage to any device powered by the cell. Furthermore, it is necessary to ensure that atmospheric substances that might damage the electrochemical constituents of the cell are prevented from entering into the interior of the cell; this is of particular significance in the case of lithium cells since lithium metal will readily react with, for example, water vapour, oxygen or carbon dioxide.

Apart from forming an effective seal it is also necessary to provide electrical insulation between the two terminals of the cell. Frequently the terminals also form part of the cell case in which case the functions of sealing and insulation may be performed by the same piece of material. In other instances the terminals take the form of conductors protruding through a purely structural cell case. If the cell case is itself formed from a conducting material it then becomes necessary to insulate the terminals from the case as well as from each other.

The need for electrical insulation limits the choice of joining techniques that can be used in cell construction. For example, techniques such as welding of metallic casings or soldering cannot be used where insulation is required. The use of a thermally bonding polymer or hot-melt adhesive seems at first sight to be suitable since it introduces an insulator between the conducting surfaces to be sealed. This technique has been claimed in, for example, British Patent No. 1346011. However, the pressure necessary to ensure an effective bond between the surfaces which are to be sealed together may be such as to express the hot-melt adhesive from between the conducting surfaces, leaving areas of the conducting surfaces in electrical contact.

Another frequently used technique for sealing electrochemical cells is to crimp an insulating gasket between the conducting surfaces. However to obtain an effective seal in this manner places certain restrictions upon the geometry and materials of the cell which may lead to an unnecessarily costly or massive design.

It is an object of the present invention to provide a method for sealing together conductive cell components in such a manner that the resultant seal is essentially hermetic and maintains electrical insulation.

Accordingly in one aspect the present invention provides a method of sealing together conductive parts of an electrochemical cell while retaining the said parts electrically insulated from each other, which method comprises interposing between the parts to be sealed a sealing material comprising a thermoplastic bonding material which will flow at the temperature which is to be used for heat-sealing the said parts together and an interlayer of an insulating

0081339

material having a melting point higher than the said temperature, and heat sealing the parts to be sealed together by applying heat and pressure to the parts to be sealed thereby to soften the bonding material so that it adheres to the said parts to form the required seal without affecting the insulating material.

According to a second aspect of the present invention, there is provided an electrochemical cell comprising at least two conductive parts sealed together but electrically insulated from each other with a sealing material which comprises a thermoplastic bonding material which has been subjected to heat and pressure so as to soften the bonding material and cause it to adhere to the parts to be sealed together, and an intermediate layer of the said insulating material.

In the present method, the temperature used to soften the bonding material is such that the insulating material does not melt. It is therefore not expressed from between the conductive surfaces to be sealed and maintains them electrically insulated from each other.

The insulating material used may be in the form of a fibrous material, in which case the bonding material will be partially absorbed between the fibres of the fibrous material. Such a fibrous material may usefully take the form of a woven material for greater strength. Examples of suitable fibrous insulating materials are glass fibre, a polyester, or a polyamide such as Nylon. A preferred insulating material of this ─────────────

type is woven glass fibre. Preferably the thickness of the insulating material is less than 0.05 mm.

The thermoplastic bonding material may be any thermal bonding agent giving/a sufficiently strong bond to the other cell components in use. It should also be as impermeable as possible to the internal constituents of the cell and vapours therefrom and to atmospheric gases and vapours. Furthermore, it should be inert to chemical attack by the internal constituents of the cell.

Suitable bonding materials may be selected from hot-melt adhesives. Examples of particularly suitable bonding materials are ionomer resins such as the polymer sold under the name "Surlyn"; copolymers of ethylene and acrylic acid; and terpolymers of ethylene, acrylic acid and an acrylic ester such as the polymer sold under the name "Kuroplast" by BASF. Preferred copolymers of ethylene and acrylic acid contain up to 15% by weight acrylic acid - a particularly preferred copolymer of this type is sold by DuPont as EAA and contains 8% by weight acrylic acid.

Generally, the sealing element is obtained by pre-laminating the bonding material to the insulating material, the resultant laminate then being cut to the required geometry. If desired, the bonding material may also be pre-laminated to one or more of the conducting surfaces; in some cases this may have an added benefit in protecting the conducting surface from chemical attack by other cell constituents.

The sealing method of the present invention may be used for cells of any electrochemical system designed to operate at a temperature below the softening point of the bonding material. It is particularly suitable for use with lithium-organic electrolyte cells.

The present invention will now be illustrated, by way of example only, with reference to the accompanying drawings, in which:-

Figure 1 is a side elevation, shown in section, of an electrical cell sealed in accordance with the present invention,

Figure 2 is a plan view, partly cut away, of the cell of Figure 1,

Figure 3 is an elevation similar to Figure 1, of an alternative embodiment of an electrical cell in accordance with the invention,

Figure 4 is a plan view, partly cut away, of the cell of Figure 3,

Figure 5 is a side elevation, partly cut away, of a battery incorporating a number of cells such as those shown in Figures 1 to 4, and

Figure 6 is an elevation, shown in section, of a further embodiment of a cell incorporating a seal in accordance with the present invention.

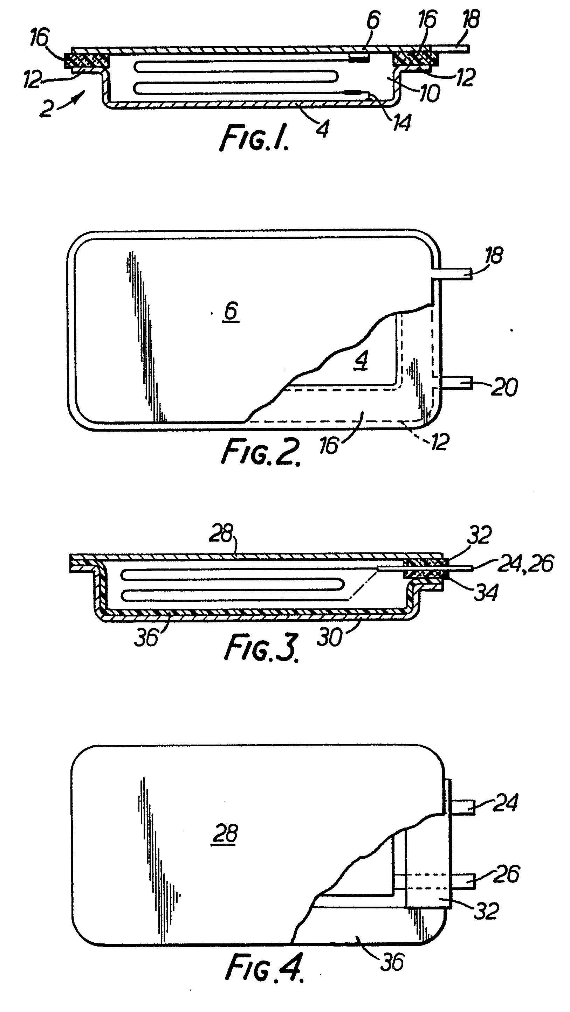

Referring to Figures 1 and 2 there is shown a cell casing 2 which is relatively flat and which is substantially rectangular in plan. The cell casing 2 is formed from a tray-like base 4 into which the electrochemical components of the cell are placed and which is then closed by sealing to it a flat rectangular cover 6.

Typically, the cover 6 is cut from a sheet of stainless steel foil or nickel-plated steel foil to form a rectangular plate 43 mm by 28 mm with rounded corners. The base 4 is pressed and cut using conventional tooling equipment from aluminium sheeting, approximately 200 microns thick, to give a rectangular container 10 - 38 mm x 23 mm and 5 mm deep - having a peripheral lip 12 whose external dimensions correspond to those of the cover. The internal surface of the aluminium preferably is roughened for better electrical contact.

In a typical lithium cell, the lithium anode and $MnO_2$/graphite cathode are deposited on stainless steel mesh current collectors and a separator material such as microporous polypropylene is introduced between the anode and cathode. The anode, separator and cathode are generally formed from longitudinal strips which are folded and laid inside the rectangular container 10 in conventional manner.

The cathode current collector is connected to the aluminium base of the casing by means of a terminal strip 14 welded to the current collector and to the base.

A gasket-like sealing element 16 of composite sealing material in accordance with the present invention cut from a sheet of the composite material, e.g. by stamping, and is positioned over the peripheral lip 12 of the aluminium base. Thereafter, the electrolyte, typically lithium perchlorate dissolved in a mixture of propylene carbonate and dimethoxyethane, is added to the components in the base, and the cover is then placed in position above the gasket 16 of sealing material.

In order to obtain the desired seal between the cover and the base, the edges of the cover and the region of the lip of the base are heated, for example to 200°C, and subjected to a suitable pressure, for example 4.14 bars (60 psi) thereby to heat-seal the composite sealing element to the cover and the said peripheral lip of the base.

A preferred composite sealing element consists of a copolymer of ethylene and 8% acrylic acid having an interlayer of an insulating material, preferably a woven mesh of glass fibre 0.038 mm thick. The conditions used to perform the heat sealing of the cover to the base of the cell casing are chosen so that the copolymer is caused to melt and adhere to the adjacent surfaces of the cover and of the base to form the desired seal while leaving the glass fibre unaffected thereby providing the necessary electrical insulation between the cover 6 and the base 4.

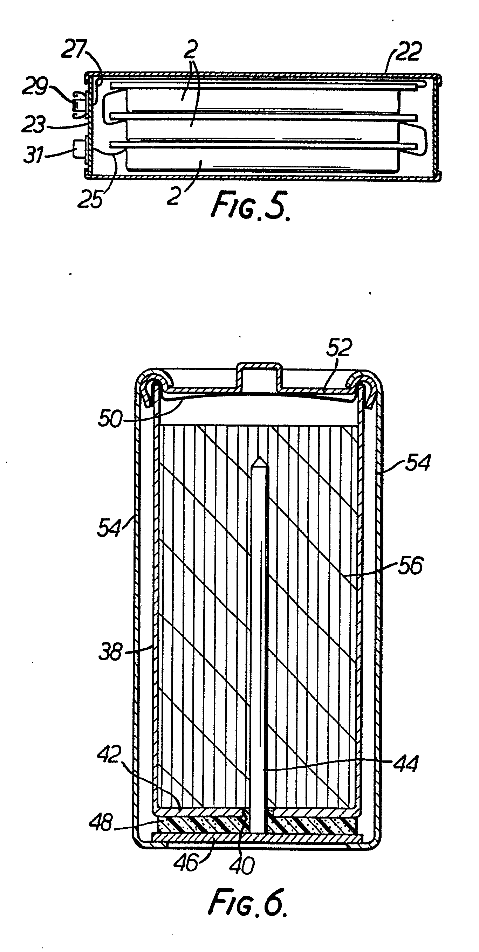

The components of the cell are arranged so that the anode makes a pressure contact with the inside surface of the cover 6; the cover thereby acts as one terminal of the cell while the base acts as the other terminal. If desired, tabs 18, 20 are formed on each of the cover 6 and the base 4 to provide means for easily connecting together a number of the cells to form a battery, for example as shown in Figure 5.

In Figure 5 is illustrated a typical 9-volt PP3 battery comprising an assembly of three cells 2 of the type illustrated in Figures 1 and 2, held together by a conventional protective jacket 22 and having terminal strips 25, 27 connected in conventional manner to terminal plugs 29, 31 located in an end cap 23 .

The electrical cell shown in Figures 3 and 4 is in many respects similar to the cell shown in Figures 1 and 2 except that the cover and base of the cell of Figures 3 and 4 do not act as terminals of the cell and are electrically insulated from the electrical elements of the cell. In this cell respective metal strips 24, 26 are connected to the anode metal current collector and the cathode metal current collector to form the anode and cathode terminals. These terminals pass out of the cell casing between the cover 28 and the base 30 of the casing and must be electrically insulated from each other and from the cover and the base. In order to ensure that the required insulation from the cover and the base is achieved strips 32, 34 of the composite sealing material in accordance with the present invention are placed above and below the lengths of the terminals as they pass out of the cell. On heat-sealing the cover to the base the glass fibre in the composite sealing material does not melt and provides the required electrical insulation of each of the said terminals from both the cover and the base while the hot-melt adhesive material gives the required seal.

The required heat-sealing of the cover to the base in regions other than that in the vicinity of the cell terminals is achieved by using a cover, or a base, or a cover and a base which is or are pre-laminated with a hot - melt adhesive material 36 such as that used in the composite sealing material in accordance with the present invention. Thus the cover, the base or both are suitably pre-laminated with a layer 36, typically 40 microns thick, of a copolymer of ethylene and 8% acrylic acid. Application of suitable pressure and heat to the edge regions of the cell casing causes the required heat seal between the cover and the base of the casing. In the resultant casing a good seal between the cover and the casing is obtained with the terminal strips 24, 26 passing out of the cell through the sealed area and being electrically insulated from the cell casing and from each other.

A cell of different construction is illustrated in Figure 6. A cylindrical can 38 with a central aperture 40 in its base 42 is formed from a metal, typically aluminium. One electrode of the cell takes the form of a pin 44, suitably of brass, having a diameter smaller than that of the aperture 40. The pin is welded to a metal plate 46, typically of nickel plated steel, having a radius similar to that of the can. This plate acts as the negative cell terminal. A disc 48 of a composition sealing material in accordance with the present invention, typically a copolymer of ethylene and 8% acrylic acid having an interlayer of woven glass fibre, of the same or greater radius than the cylindrical can is cut and placed over the outside of the base of the can. The pin 44 is driven through the disc 48 of sealing material into the aperture 40 until the plate 47 adjoins the disc 48 and is located centrally within the can as shown. To ensure sealing of the aperture 40 in the base 42, the base of the can is heated to 200°C and subjected to a pressure of 4.14 bars (60 psi) to melt and adhere the ethylene copolymer of the sealing material to the plate 46 and to the base of the can. During heat sealing some of the copolymer flows into the aperture 40 around the pin 44 and ensures that the plate 46 and the pin 44 are joined to, but electrically insulated from, the base of the can.

The lithium anode and $MnO_2$/graphite cathode are, as before, deposited on current collectors of metallic mesh and are separated by a suitable separator material. This assembly is wound into a spiral 56 with the cathode layer outermost. The spiral is inserted into the can through its open end so that the lithium anode current collector makes contact with the pin 44 and the manganese dioxide/graphite cathode current collector contacts the can 38 which acts as the other electrode. Electrolyte, suitably lithium perchlorate dissolved in a mixture of propylene carbonate and dimethoxyethane, is added to the can and a lid 50 for the can made of aluminium having an inner layer of a hot-melt adhesive laminated thereto is sealed on to the can by fusing the hot-melt adhesive. Finally, a cap 52, suitably of tin plated steel, acting as the positive cell terminal is secured in electrical contact over the end of the can 38 opposite to that end adhered to the metal plate 46. The cell may, if desired, be surrounded by a decorative outer jacket 54.

Although the specific embodiments described above have been described with particular reference to a lithium/manganese dioxide electrochemical system, the present invention is equally applicable to cells incorporating other electro-chemical systems.

For example, the sealing method of the invention can be applied to cells having an aqueous electrolyte, a zinc anode and manganese dioxide cathode. Typically a cell of the structure shown in Figures 1 and 2 is used, except that the cover 6 is formed of zinc sheet coated on the inside with a layer of carbon and organic binder. Such coated zinc sheet is well known in the art of making layer cells such as PP3 and PP9 cells. The manganese dioxide cathode is attached to and in electrical contact with the composite cover. The base 4 of the cell is formed from zinc sheeting coated on the outside with a polymeric material which is not attacked by the electrolyte, for example polymeric material such as polyethylenes, polystyrenes or polyamides. The inside of the zinc sheet base is amalgamated. The separator is suitably of the kraft paper type and the electrolyte is an aqueous mixture of ammonium chloride and zinc chloride containing a gelling agent.

The gasket sealing element 16 consists of a fibrous substrate of Nylon which acts as the required insulating material impregnated with a polyamide hot-melt adhesive material as the required bonding material. A suitable bonding material is a polyamide hot-melt adhesive sold under the name "Versamide". Sealing of the gasket element is achieved by brining together the cover 6, the base 4 and the sealing element 16 at 180°C and applying a suitable pressure to the areas to be sealed.

The method of sealing of the present invention results in an effective, hermetic seal and results in the desired electrical insulation of different components of the cell being maintained. A further advantage of the present method is that it is cost effective and is easy to use in the mass production of electrical cells. Furthermore in the cells of flat configuration, the available space inside the cell is more effectively used than normal.

CLAIMS:

1. A method of sealing together conductive parts (4, 6) of an electrochemical cell while retaining the said parts (4, 6) electrically insulated from each other, which method comprises interposing between the parts to be sealed a sealing material (16) characterised in that the sealing material comprises a thermoplastic bonding material which will flow at the temperature which is to be used for heat-sealing the said parts together and an interlayer of an insulating material having a melting point higher than the said temperature, and in that the parts to be sealed together are heat-sealed by applying heat and pressure to the parts to be sealed thereby to soften the bonding material so that it adheres to the said parts to form the required seal without affecting the insulating material.

2. A method according to Claim 1, wherein the thermoplastic bonding material is a hot-melt adhesive.

3. A method according to Claim 2, wherein the hot-melt adhesive is one or more of an ionomer resin, a copolymer of ethylene and acrylic acid, and a terpolymer of ethylene, acrylic acid and an acrylic ester.

4. A method according to Claim 3, wherein the hot-melt adhesive is a copolymer of ethylene and acrylic acid having up to 15% by weight acrylic acid.

5. A method according to any one of the preceding claims, wherein the insulating material is of glass fibre, a polyester or a polyamide.

6. A method according to any one of the preceding claims, wherein the thickness of the insulating material is less than 0.05 mm.

7. An electrochemical cell characterised by at least two conductive parts (4, 6) sealed together but electrically insulated from each other with a sealing material (16) which comprises a thermoplastic bonding material which has been subjected to heat and pressure so as to soften the bonding material and cause it to adhere to the parts to be sealed together, and an intermediate layer of insulating material.

8. An electrochemical cell according to Claim 7, comprising a casing formed from a tray-like base (4) to which a cover (6) is sealed but electrically insulated therefrom with said sealing material (16), the cover (6) acting as one terminal of the cell while the base (4) acts as the other terminal of the cell.

9. An electrochemical cell according to Claim 7, comprising a casing formed from a tray-like base (30) having a cover (28) sealed thereto and containing electrical terminals (24, 26) connected to the electrochemical components within the casing, the said terminals (24, 26) passing out of the casing between the cover (28) and the base (30) and being sealed to, and insulated from, the cover (28) and the base (30) with the said sealing material (16).

10. An electrochemical cell according to Claim 7, comprising a casing in the form of a cylindrical can (38), either terminal of which comprises a conductive metal plate (46) with a conductive probe (44) which passes into the interior of the can (38), the said metal plate and associated probe being sealed to, and electrically insulated from, the can by the said sealing material (16).

11. A cell according to any one of Claims 7 to 10, wherein the thermoplastic bonding material is a hot-melt adhesive which is selected from an ionomer resin, copolymers of ethylene and acrylic acid, and terpolymers of ethylene, acrylic acid and an acrylic ester.

12. A cell according to any one of Claims 7 to 11, wherein the insulating material is of glass fibre, a polyester or a polyamide.

16   6   16   18

12

2

10

14

4

*FIG.I.*

18

6

4

20

16   12

*FIG.2.*

28   32

24,26

34

36   30

*FIG.3.*

28

24

26

32

36

*FIG.4.*

FIG.5.

FIG.6.